# EUROPÄISCHE PATENTSCHRIFT

(11) **EP 3 165 472 B1**
(45) Veröffentlichungstag und Bekanntmachung des Hinweises auf die Patenterteilung: **19.09.2018**
(21) Anmeldenummer: 16002309.9
(22) Anmeldetag: 28.10.2016
(51) Int. Cl.: B65B 59/04, B65B 3/32, F04B 15/02, F04B 15/00, G01F 11/22, G01F 11/24

(54) **DOSIERAGGREGAT MIT SPEICHERBEHÄLTER**
DOSING UNIT WITH STORAGE TANK
GROUPE DE DOSAGE COMPRENANT UN RÉSERVOIR DE STOCKAGE

(30) Priorität: 04.11.2015 DE 102015014231
(43) Veröffentlichungstag der Anmeldung: 10.05.2017
(73) Patentinhaber: Holmatec Maschinenbau GmbH & Co. KG, 48499 Salzbergen (DE)
(72) Erfinder: Große-Rechtien, Heribert, 48431 Rheine (DE)
(74) Vertreter: Wischmeyer, André

(56) Entgegenhaltungen:
- EP-A1- 2 112 066
- DE-A1- 1 915 901
- DE-B- 1 206 347
- JP-B1- S4 838 954
- US-A- 1 499 366
- US-A- 2 578 732
- US-A- 2 958 346

## Beschreibung

Die Erfindung betrifft ein Dosieraggregat mit einem schütt- oder fließfähige Produkte aufnehmenden Speicherbehälter, wobei gemäß dem Oberbegriff des Anspruchs 1 jeweilige Baugruppen zur portionsweisen Abgabe von Teilmengen eines Produkts in jeweilige Abführleitungen zusammenwirken.

Aus DE 1 782 661 ist eine Dosiermaschine bekannt, die nach dem Prinzip eines Verdrängerkolbens aufgebaut ist und für flüssige, körnige oder pulverförmige Stoffe einsetzbar ist. Dabei sind in einem Dosierzylinder zwei Kolben gegenläufig bewegbar angeordnet, so dass die Zu- und Abführung der zu dosierenden Stoffe im inneren Totpunkt der Kolben erfolgen kann. Dabei wird das aus einem Trichter zugeführte Produkt mit vergleichsweise hoher Frequenz in den jeweiligen Abführkanal eingefördert. Bei einem ähnlichen Vorschlag gemäß DE 1 839 039 wird die Steuerung im Bereich der Abfüllmaschine dadurch verbessert, dass das aus einem Vorratsbehälter abzugebende Füllgut im Bereich eines Mehrwegehahnes an unterschiedliche Füllsituationen angepasst werden kann.

Bei einem System zum Füllen von Konservendosen gemäß DE 1 851 553 wird ausgehend von einem Fülltrichter eine unter diesem befindliche Trommel mit Kolbenbohrungen genutzt, wobei das Produkt bei in der Kolbenbohrung abgesenktem Kolben unter Schwerkraftwirkung aufgenommen wird und danach in einer verschwenkten Position der Trommel das Produkt durch eine nockengesteuerte Bewegung des Kolbens nach unten in die Konservendose ausgefördert werden kann.

Gemäß DE 1 206 347 wird eine Vorrichtung zum selbsttätigen und fortlaufenden Dosieren von insbesondere plastischen Stoffen wie Butter, Margarine, Speisefett o. dgl. beschrieben, wobei diese mit mehreren Dosiereinrichtungen in Form von Zylindern mit darin bewegbaren Kolben ausgestattet ist. Dabei wird von einer Konstruktion ausgegangen, bei der die Füllgutzuführkanäle gegenüber den Entleerungs- und Abgabekanälen in getrennten Ebenen positioniert sind. Unter Nutzung einer ungeraden Anzahl von Dosiereinrichtungen kann - bei deren radialem Umlauf - mit einer axialen Bewegung abwechselnd ein Füllvorgang und ein Ausstoßvorgang realisiert werden. Dies bedeutet, dass jeweils nur an einer vorgegebenen Position des Systems ein Becher o. dgl. Behältnis zur Aufnahme des Füllgutes zu positionieren ist.

Gemäß einem Vorschlag in DE 1 998 060 ist eine Fülleinrichtung zum dosierten Abfüllen von weichplastischen Stoffen vorgeschlagen, wobei ebenfalls ein Dosierzylinder mit einem entsprechenden beweglichen Kolben zusammenwirkt. Dabei ist vorgesehen, dass im unterhalb des Speicherbehältnisses befindlichen Abfüllgehäuse ein drehbar gelagerter Drehzylinder mit axial verschiebbarer Kolbenstange und Stufenkolben vorgesehen ist. In einer Rückzugsposition des Stufenkolbens wird aus dem Speicherbehälter das Füllgut angesaugt, danach wird der Drehzylinder in eine Schwenkposition verbracht, so dass eine Verbindung zu den Aufnahmebehältnissen freigegeben wird. Mit einem nachfolgenden Kolbenhub kann der Ausstoß und die Entleerung des Drehkolbens bewirkt werden. In kontinuierlicher Abfolge wird danach die nächste Ansaugphase nach Bewegung des Drehzylinders eingeleitet. Bei diesem System werden zwar zwei Behältnisse gleichzeitig gefüllt, jedoch ist die Produktivität der Anlage insgesamt begrenzt.

Aus DE 2 123 212 ist eine Vorrichtung zum Dosieren und Abfüllen von viskosen Nahrungs- und Genussmitteln bekannt, wobei in linearer Nebeneinanderordnung an einem Schiebergehäuse mit Drehschieber und Vorratsbehälter jeweilige Kolben-Zylinder-Einheiten angeordnet sind. Durch entsprechende Positionierungen des Drehschiebers im Gehäuse wird die jeweilige Ansaugphase eingeleitet, und in einer zweiten Schwenkposition kann das angesaugte Produkt in ein entsprechendes Behältnis nach unten ausgefördert werden. Auch DE 2 213 783 zeigt eine Dosiereinrichtung für Abfüllmaschinen, wobei das Konzept davon ausgeht, dass der vor der Kolben-Zylinder-Einheit befindliche Dosierraum zum entsprechenden Vorratsbehältnis hin so weit geöffnet werden kann, dass das Füllgut durch Saugwirkung und Schwerkraft in den Dosierraum gelangt und diesen vollständig ausfüllt.

Eine Dosiervorrichtung für saug- und pumpfähige Medien gemäß DE 75 24 813 U1 sieht vor, dass an sich bekannte, um eine vertikale Achse schwenkbare Drehschieber mit mindestens je zwei von vertikal in horizontal übergehenden Bohrungen versehen sind. Dabei wird erreicht, dass in der Ansaugstellung eine Verbindung zwischen dem Vorratsbehälter und den horizontal und übereinander angeordneten Dosierkammern hergestellt werden kann. Nachfolgend wird durch horizontale Bohrungen - die in einer Ausspülstellung die Verbindung zwischen Dosierkammer und Fülldüse herstellen - ein entsprechender Ausfördervorgang geregelt. Damit wird eine kompakte Konstruktion mit vergleichsweise kurzen Drehschiebern realisiert.

Bei einer Vorrichtung zum Dosieren von Produkten gemäß DE 26 45 461 C3 werden die Produkte mittels eines Schraubförderers in die Steuerkanäle einer Steuerbüchse eingepresst, so dass mittels einer an dieser Büchse befindlichen Kolben-Zylinder-Einheit und eines entsprechenden Bedienhebels die Weiterleitung in eine Ausleitöffnung möglich ist. Eine Dosiereinrichtung gemäß DE 27 12 783 A1 weist ein an sich bekanntes Kolben-Dosiergerät auf, wobei eine dem Kolben zugeordnete Flüssigkeitsspülzone für eine Spülflüssigkeit genutzt werden kann. Dabei ist das Drehventil mit einer T-förmigen Durchlassöffnung so ausgeführt, dass eine Spülposition eingestellt werden kann. Auch bei einer Abfülleinrichtung für flüssige Medien gemäß DE 2 308 689 A1 ist eine zentrale Kolben-Zylinder-Einheit mit einer Zuleitung für ein Spülmittel versehen, so dass ohne Ausbau von Teilen ein schnelles Reinigen und Sterilisieren dieser Einrichtung möglich ist.

Gemäß CH 656 101 ist eine Vorrichtung zum dosierten Abfüllen von flüssigen und pastenförmigen Materialien vorgeschlagen, wobei diese eine Mehrzahl von in einem Schieberkörper angeordneten Dosierkammern aufweist. Dabei ist der Schieberkörper relativ zur jeweiligen Speiseleitung und Ausstoßöffnung beweglich. Dabei können die Ansaugbohrungen mit den Speiseleitungen bzw. die Ausstoßbohrungen mit den Ausstoßöffnungen wahlweise verbunden werden. Für einen automatischen Ablauf des Dosiervorgangs ist vorgesehen, dass mindestens ein Antriebsmittel für den Schieberkörper und die Dosierkolben vorgesehen ist.

Gemäß einer Lösung in DD 286 482 A7 wird eine Vorrichtung zum volumetrischen Abmessen kleinstückiger, deformierbarer Güter vorgeschlagen. Dabei ist vorgesehen, dass der Vorratsbehälter innen an einer Seite bzw. an zwei gegenüberliegenden Seiten jeweils einen an die Behälterwandungen anliegenden Dosierschieber aufweist, der eine das Dosiervolumen bestimmende, nach außen abgeschrägte Bodenfläche aufweist. Damit kann das Füllgut aus einer unteren Aufnahmeposition in eine obere Ausstoßposition verlagert und hier über seitliche Förderrohre unter Schwerkraftwirkung abgeleitet werden.

Gemäß DE 43 05 898 A1 ist eine Vorrichtung zum Eindosieren von insbesondere pulverförmigem Füllgut vorgesehen, wobei im Inneren einer Trommel eine Kolbenbetätigungstraverse vorgesehen ist, mittels der die in Aufnahmeräumen beweglichen Kolben aus der Ansaugposition in eine vertikal nach unten gerichtete Ausleitposition verlagert werden können. Eine ähnliche Konstruktion ist in DE 44 00 377 A1 gezeigt, wobei hier ein Verfahren und eine Vorrichtung zum Portionieren und Verpacken von Produkten gezeigt wird, bei dem zum Befüllen und/oder Entleeren des Portionsbehälters das jeweilige Volumen verändert werden kann.

Bei einer Vorrichtung zur Volumendosierung gemäß DE 26 20 671 A1 wird stückiges Gut in Form von Fleischstücken aus einem Behälter in ein Gehäuse eingeleitet und hier mittels eines Kompressionskolbens verpresst. Dieser wirkt mit einem gegenläufigen Dosierkolben zusammen, so dass das volumendosierte und gepresste Gut aus dem System ausgeschoben werden kann.

Gemäß DE 101 40 001 A1 ist eine Abfüllvorrichtung für flüssige und/oder pastöse Produkte gezeigt, bei der zwei Produkte abgefüllt werden können. Dabei ist ein Speicher für ein zweites Produkt vorgesehen, und in Abhängigkeit von der Stellung einer Ventilvorrichtung können wahlweise entweder der Vorratsbehälter für das erste Produkt oder der Speicher für das zweite Produkt mit der Dosierkammer in Verbindung gebracht werden. Eine Einrichtung mit einem Speichergefäß ist auch in US 6,237,650 B1 gezeigt. Unterhalb dieses Speichergefäßes ist eine motorisch angetriebene Dosierbaugruppe mit Kolben-Zylinder-Füllorgan vorgesehen, das in Umfangsrichtung der Einrichtung auf einem Schwenkradius verlagerbar ist.

Aus der US 1 499 366 A ist eine Konservenabfüllvorrichtung bekannt, die einen Speicherbehälter für fließfähige Produkte aufweist, der mit mehreren zylinderförmigen Dosierräumen verbindbar ist. Der rotierbare Speicherbehälter ist im Bereich seines Behälterbodens mit mehreren Ausleitöffnungen versehen, die mit Hilfe einer oberhalb des Behälterbodens befindlichen nicht rotierbaren Platte, gegenüber dem Speicherbehälter geöffnet oder verschlossen werden können. Das in den unterhalb des Speicherbehälters angeordneten Dosierraum gelangte fließfähige Produkt kann mittels eines Förderorgans mit definiertem Dosiervolumen in eine Abfüllleitung überführt werden.

Die Erfindung befasst sich mit dem Problem, ein Dosieraggregat mit einem schütt- oder fließfähige Produkte aufnehmenden Speicherbehälter zu schaffen, wobei mit vergleichsweise einfachen Bauteilen eine im Wesentlichen unter Schwerkraftwirkung steuerbare Produktführung in eine Vielzahl von Abführleitungen möglich ist und dabei eine kompakte Einheit mit vergleichsweise geringem Raumbedarf bereitgestellt wird.

Die Erfindung löst diese Aufgabe durch ein Dosieraggregat mit den Merkmalen des Anspruchs 1. Weitere vorteilhafte Ausgestaltungen ergeben sich aus den Ansprüchen 2 bis 22.

Das in vorteilhafter Ausführung für eine Dosiermaschine konzipierte Dosieraggregat ist mit einem Speicherbehälter versehen, der das unter Schwerkraftwirkung schütt- oder fließfähige Produkt so aufnimmt, dass dieses in einen unter dem Speicherbe-hälter befindlichen Dosierraum eingeleitet und mittels eines der als Stellkolben ausgebildeten Förderorgane in eine jeweilige Abführleitung überführt werden kann.

Das erfindungsgemäße Konzept eines derartigen Dosieraggregates geht davon aus, dass der zur Abgabe des Produkts vorgesehene Speicherbehälter im Bereich seines Behälterbodens mit mehreren Ausleitöffnungen versehen ist und dabei unterhalb des Behälterbodens ein jeweilige mit den Ausleitöffnungen korrespondierender Produkteinlässe sowie jeweilige Ausstoßdurchlässe aufweisender Verteilkörper verlagerbar angeordnet ist. Ausgehend von dieser Basiskonstruktion ist vorgesehen, dass jeweilige, den Produkteinlass passierende Fördermengen in einen oberhalb der Stellkolben befindlichen Dosierraum eingeleitet werden. Danach erfolgt eine Portionierung durch Unterbrechung des Produktflusses. Anschließend wird eine das variabel vorgebbare Dosiervolumen definierende Teilmenge des Produkts über die Ausstoßdurchlässe in die Abführleitung ausgefördert.

Die Verlagerung des Verteilkörpers kann dabei über eine Dreh- bzw. Rotationsbewegung erfolgen. Sie kann eine radiale, ggf. getaktete Schwenkbewegung um eine vertikale Hochachse sein. Vorzugsweise erfolgt die Bewegung als Hin- und Herbewegung um diese Hochachse. Denkbar ist auch, ein translatorisches System mit linear beweglichem Verteilkörper aufzubauen, wobei diesem eine Reihenanordnung von Ausleitöffnungen im Bereich des Behälterbodens zugeordnet wird.

Damit wird ein für variable Anwendungsgebiete geeignetes Dosieraggregat bereitgestellt, bei dem lediglich mit jeweiligen Positionswechseln des Verteilkörpers - und dabei ortsfest verbleibenden Komponenten der Stützkonstruktion - die getakteten Ausstoß- und Füllverlagerungen von Produkten erreichbar sind, so dass ein insgesamt verschleißarm arbeitendes und langzeitstabil mit geringem Wartungsaufwand nutzbares System bereitgestellt wird.

Eine zweckmäßige Ausgestaltung des insbesondere für Molkereiprodukte o. dgl. einsetzbaren Dosieraggregates sieht vor, dass im Bereich des unteren Behälterbodens mehrere, mit den jeweiligen Durchlässen im Verteilkörper korrespondierende Ausleitöffnungen vorgesehen sind, die entsprechend der Steuerfunktion anzufahren sind. Zur effektiven Ausführung der gesteuerten Schwenkverlagerung im Bereich des Verteilkörpers ist vorgesehen, dass die über diesem befindlichen Ausleitöffnungen jeweils mit radialem Abstand zu einer vertikalen Hochachse des Systems angeordnet sind.

Die funktionale Verknüpfung dieser Elemente des Dosieraggregates sieht vor, dass in einer Verteilphase mittels einer die jeweiligen oberen Produkteinlässe phasenweise abdeckenden Verlagerung des Verteilkörpers eine zuvor in vorteilhafter Steuerfunktion nach unten in den Dosierraum eingeförderte Produktmenge als jeweiliges Dosiervolumen abgeteilt wird. Der funktionsintegrierte Aufbau des schwenk- oder drehbaren Verteilkörpers ist dabei so gestaltet, dass gleichzeitig bei der Schwenkverlagerung des Verteilkörpers die in diesem vorgesehenen Ausstoßdurchlässe oberhalb des jeweiligen Dosierraums positioniert werden. Damit wird erreicht, dass das portionierte Dosiervolumen mittels des jeweiligen Stellkolbens in einer Förderrichtung nach oben durch die Ausstoßdurchlässe hindurch in die jeweilige Abführleitung eingefördert werden kann.

Eine effiziente Steuerung dieses Aggregates sieht vor, dass der insbesondere mit einer Vor- und Rückstellbewegung schwenkgesteuerte Verteilkörper jeweils phasenweise eine Füll- oder eine Ausstoßlage oberhalb der Dosierräume definiert. Eine alternative Ausführung ist dadurch denkbar, dass der Verteilkörper als ein unterhalb des Behälterbodens drehbares Teil ausgebildet ist und damit in einer jeweiligen Drehrichtung die zuvor beschriebene getaktete Füll-Ausstoß-Steuerung realisiert werden kann.

Ein effektiver Einsatz des Dosieraggregates ist dadurch möglich, dass die in den Verteilkörper jeweils als zylindrische Leitkanäle mit zur Hochachse paralleler Förderrichtung eingebrachten Produkteinlässe sowie die diesen jeweils zugeordneten Ausstoßdurchlässe - mit entsprechendem radialem Abstand - nebeneinander angeordnet sind. Dabei ist vorgesehen, dass diese Leitkanäle gemeinsam auf einem zur Hochachse konzentrischen Schwenkkreis mit jeweils konstantem Bogenabstand so angeordnet sind, dass entsprechend dem jeweiligen Schwenk-Takt die gleichzeitige Bedienung sämtlicher über den Umfang verteilter Kanal-Paarungen möglich ist.

Eine zweite Ausführung der Öffnungen im Verteilkörper sieht vor, dass dessen Produkteinlässe sowie die entsprechenden Ausstoßdurchlässe jeweils als zumindest bereichsweise eine geneigte Förderrichtung definierende Leitkanäle ausgeformt werden. Diese Konstruktion ist darauf abgestellt, dass mit "verschachtelbaren" Kanalführungen auf engerem Raum die Anzahl der Funktions-Durchlass-Paarungen vorteilhaft erhöht werden kann und damit das Dosieraggregat an unterschiedliche Verteil-Anforderungen mit geringem Aufwand angepasst werden kann. Ausgehend von diesen geneigten Förderrichtungen ist vorgesehen, dass die jeweils paarweise mit dem zugeordneten Dosierraum zusammenwirkenden Leitkanäle von Produkteinlass und Ausstoßdurchlass durch einen Winkelabstand ihrer Längsachsen definierte und damit versetzt verlaufende Förderrichtungen aufweisen.

Dabei ergibt sich, dass die im Verteilkörper geneigten Förderrichtungen der jeweiligen Produkteinlässe so ausgerichtet sind, dass deren jeweilige Einlassquerschnitte auf einem zur Hochachse inneren Schwenkkreis liegen und die zugeordneten Auslassquerschnitte einen radial beabstandeten äußeren Schwenkkreis bilden.

Daraus folgt, dass mit den geneigten Förderrichtungen der paarweise zugeordneten Ausstoßdurchlässe ebenfalls jeweilige Einlass- und Auslassquerschnitte vorgegeben sind, diese jedoch so schräg bzw. geneigt verlaufen, dass diese Querschnitte mit Bogenabstand auf dem gemeinsamen äußeren Schwenkkreis an der Ober- bzw. Unterseite des Verteilkörpers liegen.

Die konstruktive Umsetzung des Dosieraggregates sieht weiterhin vor, dass der im zentralen Bereich der Hochachse mit einem unterseitigen Antriebsmotor versehene Verteilkörper als eine im Bereich eines Mitnehmers gehaltene Formplatte ausgebildet ist. Diese an die Steuer- und Stellfunktionen speziell anpassbare Formplatte kann mit einer die weiteren Systemteile des Aggregates tragenden Unterkonstruktion lösbar verbunden werden. Damit ist ein modulares Konzept insbesondere im Bereich des Verteilkörpers denkbar, der - um beispielsweise die Anzahl der zu bedienenden Ausförderleitungen zu variieren - mit geringem Aufwand auswechselbar ist.

Die konstruktive Gestaltung dieser Formplatte ist darauf abgestellt, dass diese mit einem zentralen Verbindungsteil so geformt wird, dass hier von jeweiligen Zapfenteilen eines Mitnehmers des Antriebs gebildete Verbinder formschlüssig von der Formplatte erfasst werden können. Diese Baugruppe der Schwenk-Konstruktion sieht vor, dass in dem Verbindungsteil jeweilige, das Bogenmaß der Schwenkverlagerung auf dem Schwenkkreis begrenzende und von einem Führungsbolzen des Mitnehmers durchgriffene Führungsnuten eingeformt sind. Eine zweckmäßige Weiterbildung der Führungsbolzen ist darauf gerichtet, dass diese mit zumindest einem in einer jeweiligen Funktionslage fixierbaren oder lösbaren Antriebsorgan verbunden sind.

Das Dosieraggregat ist im Bereich der vorbeschriebenen Unterkonstruktion des Systems vorteilhaft mit einem im Querschnitt nach unten offenen Hutprofil-Träger versehen. An diesem ist eine die Querseitenwände verbindende obere Deckplatte vorgesehen, die an einem radialen Außenbereich oben liegend oder seitlich abragend jeweilige, in die von Zylinderrohren gebildeten Dosierräume einmündende Verbindungsöffnungen aufweist.

Ausgehend von diesem Konzept der Unterkonstruktion ist vorgesehen, dass die mit diesem verbundenen und die Dosierräume unterhalb des Verteilkörpers aufweisenden Zylinderrohre nach Art von feststehenden Dosierkammern angeordnet werden. Damit ist es möglich, durch eine gleichzeitige Verlagerung sämtlicher Stellkolben im Bereich der Dosierräume den Ausfördervorgang im Bereich mehrerer Ausförderleitungen gleichzeitig mit geringem Steuerungsaufwand durchzuführen. Damit kann ein vergleichsweise großes Fördervolumen innerhalb von kurzer Zeit portionsweise aus dem Speicherbehälter verteilt werden.

Die konstruktive Umsetzung im Bereich des als Formplatte ausgebildeten Verteilkörpers sieht vor, dass dieser auf seiner zum Behälterboden gerichteten Oberseite eine mit dem Speicherbehälter verbundene Ringplatte aufweist. Ausgehend von dem vorbeschriebenen Verteilprinzip mit den Ausstoßdurchlässen ist diese Ringplatte so konzipiert, dass aus dieser die jeweiligen rohrförmigen Ansätze der Abführleitungen austreten.

Mit dem vorbeschriebenen Dosieraggregat wird ein System aufgebaut, das weitgehend ohne zusätzliches Vakuum die portionierten Produkte über den Verteilkörper in jeweilige, mit den Abführleitungen zusammenwirkende Dosierbehälter einförderbar sind. Es versteht sich, dass das Dosieraggregat auch als autarker Teil einer variabel ausrüstbaren Dosiermaschine vorgesehen sein kann, so dass unterschiedliche Anwendungsgebiete und Dosieraufgaben mittels der erfindungsgemäßen Basiskonstruktion des Dosieraggregates realisiert werden können.

Eine für Reinigungs- und Desinfektionszwecke vorteilhafte Ausführung des Systems sieht vor, dass im Bereich zwischen oberem Dosierbehälter und Unterkonstruktion zumindest eine im Wesentlichen horizontale Teilungsebene definiert wird, so dass eine modulartig trennbare Struktur nutzbar wird. In diesem Bereich können aneinandergrenzende Teile voneinander gelöst und in eine Abstandslage verbracht werden. In einem dabei gebildeten Zwischenraum sind insbesondere die zentralen Verteilbaugruppen des Verteilkörpers einfacher erreichbar.

Denkbar ist auch, den Verteilkörper an einem der Module über formschlüssige Verbinder so festzulegen, dass ein Herausnehmen möglich ist und der Verteilkörper als gelöstes Einzelteil eine entsprechende Reinigungsposition einnehmen kann.

Die jeweiligen Verbindungsteile zwischen den Modulen und zwischen diesen und dem Verteilkörper sind dabei so konzipiert, dass nach Erreichen einer motorisch angesteuerten Abstandslage beim nachfolgenden Zusammenbau eine genaue sensorgesteuerte Rückführung der Module bzw. des Verteilkörpers in die jeweilige Gebrauchslage möglich ist. Insbesondere kann das von der Unterkonstruktion abgehobene Modul des Speicherbehälters aus einer oberen Lage in die Arbeitsposition zurückbewegt werden. Dazu sind die Module über hydraulische Heber o. dgl. Stellorgane verbunden.

Weitere Einzelheiten und vorteilhafte Ausgestaltungen der Erfindung ergeben sich aus den Zeichnungen, in der mehrere Ausführungsbeispiele des erfindungsgemäßen Dosieraggregates dargestellt sind. In der Zeichnung zeigen:
- Fig. 1: eine Perspektivdarstellung einer Dosiermaschine mit dieser zugeordnetem Dosieraggregat,
- Fig. 2: eine perspektivische Einzeldarstellung des Dosieraggregates mit einem schütt- oder fließfähige Produkte aufnehmenden Speicherbehälter in einer ersten Ausführungsform mit seitlich angesetzten Abführleitungen,
- Fig. 3: eine Schnittdarstellung des Dosieraggregates gemäß Fig. 2, wobei die Dosier-Baugruppen in einer einen Produkteinlass in jeweilige Dosierräume oberhalb eines Stellkolbens zulassenden Lage dargestellt sind,
- Fig. 4: eine Schnittdarstellung ähnlich Fig. 3, wobei aus den Dosierräumen mittels des jeweiligen Stellkolbens ein Dosiervolumen über einen Ausstoßdurchlass in eine Abführleitung überführbar ist,
- Fig. 5: eine Perspektivdarstellung ähnlich Fig. 2 in einer zweiten Ausführung des Dosieraggregates, das nach oben angesetzte Abführleitungen im Bereich der Dosierräume aufweist,
- Fig. 6: eine Draufsicht auf das Dosieraggregat gemäß Fig. 5,
- Fig. 7: eine Draufsicht auf den Speicherbehälter des Dosieraggregates ähnlich Fig. 5,
- Fig. 8: eine Schnittdarstellung des Dosieraggregates gemäß einer Linie VII-VII in Fig. 7,
- Fig. 9: eine vergrößerte Ausschnittsdarstellung von Baugruppen des Dosieraggregates gemäß einer Linie IX in Fig. 8,
- Fig. 10: eine Schnittdarstellung im Bereich des unterhalb des Speicherbehälters vorgesehenen Verteilkörpers gemäß einer Linie X-X in Fig. 6,
- Fig. 11: eine Perspektivdarstellung des Verteilkörpers gemäß einer Linie XI-XI in Fig. 6,
- Fig. 12: eine Einzeldarstellung des erfindungsgemäßen Verteilkörpers in Seitenansicht,
- Fig. 13: eine Draufsicht des Verteilkörpers gemäß Fig. 12,
- Fig. 14: eine Perspektivdarstellung des Verteilkörpers gemäß Fig. 12,
- Fig. 15: eine Schnittdarstellung des Verteilkörpers gemäß einer Linie XV-XV in Fig. 13,
- Fig. 16: eine geschnittene Seitenansicht des Verteilkörpers gemäß einer Linie XVI-XVI in Fig. 13,
- Fig. 17: eine Seitenansicht des konstruktiv vervollständigten Dosieraggregates in Blickrichtung XVII gemäß Fig. 1 (ohne Rollwagen),
- Fig. 18: eine Vorderansicht des Dosieraggregates gemäß Fig. 17, und
- Fig. 19: eine Vorderansicht gemäß Fig. 18 mit aus dem System gelöstem Verteilkörper in Wartungsposition.

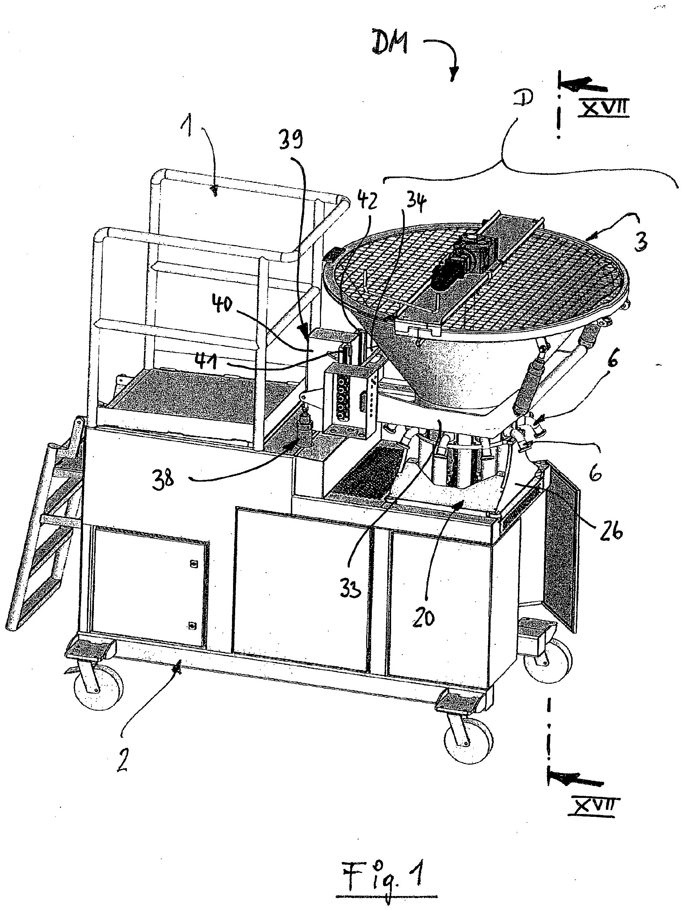

In Fig. 1 ist eine insgesamt mit DM bezeichnete Dosiermaschine als autarke Einheit mit einer Bedienrampe 1 und einem entsprechenden Rollwagen 2 dargestellt. Von der Bedienrampe 1 aus ist ein insgesamt mit D bezeichnetes Dosieraggregat im Bereich eines - hier kegelförmigen - Speicherbehälters 3 erreichbar, so dass dieser mit einem entsprechenden Produkt gefüllt werden kann.

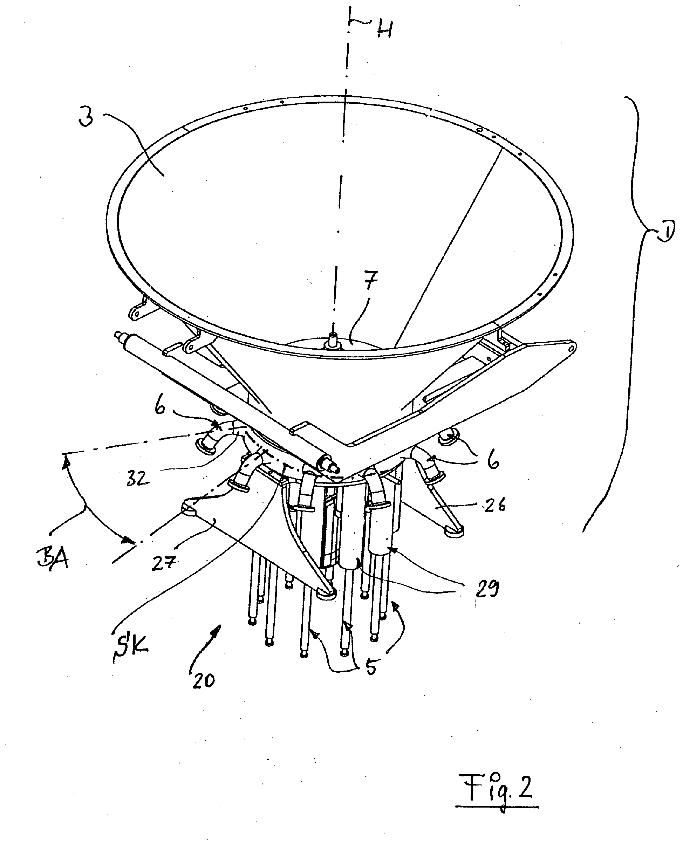

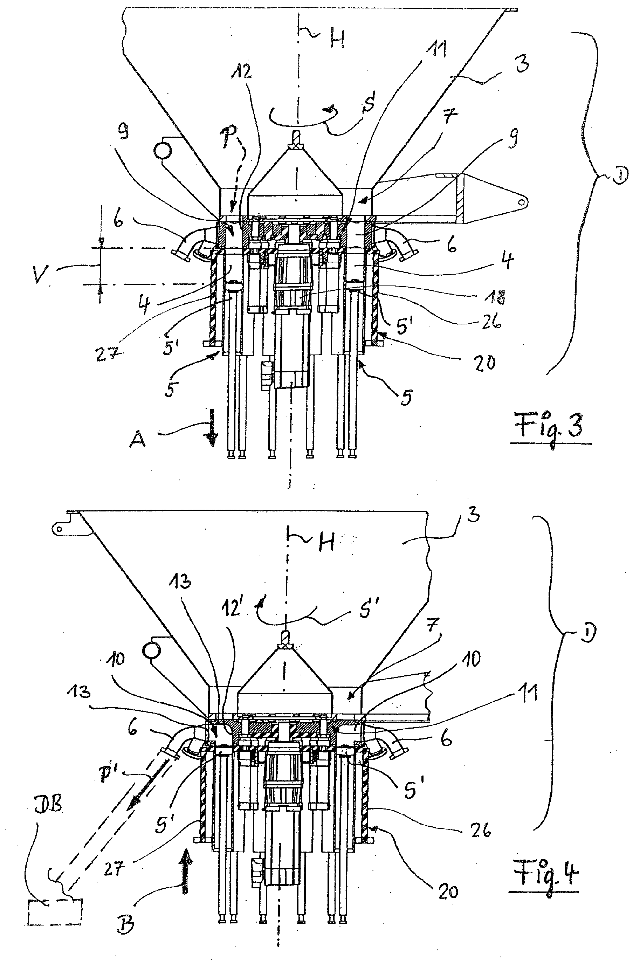

Ausgehend von an sich bekannten Dosierprinzipien ist in dem System ein im Wesentlichen zylinderförmiger Dosierraum 4 (Fig. 2, Fig. 3) so angeordnet, dass durch eine Verbindung (Förderrichtung P; Fig. 3) zum - hier oben liegenden - Speicherbehälter 3 hin ein entsprechendes Dosiervolumen V (Fig. 3) im Dosierraum 4 aufnehmbar ist. Mit dem Dosierraum 4 wirkt dabei ein insbesondere als Stellkolben 5' ausgebildetes Förderorgan 5 so zusammen, dass eine das Dosiervolumen V definierende Teilmenge des Produkts P portionsweise in eine Abführleitung 6 überführt werden kann (Stellphase im Übergang von Fig. 3 zu Fig. 4).

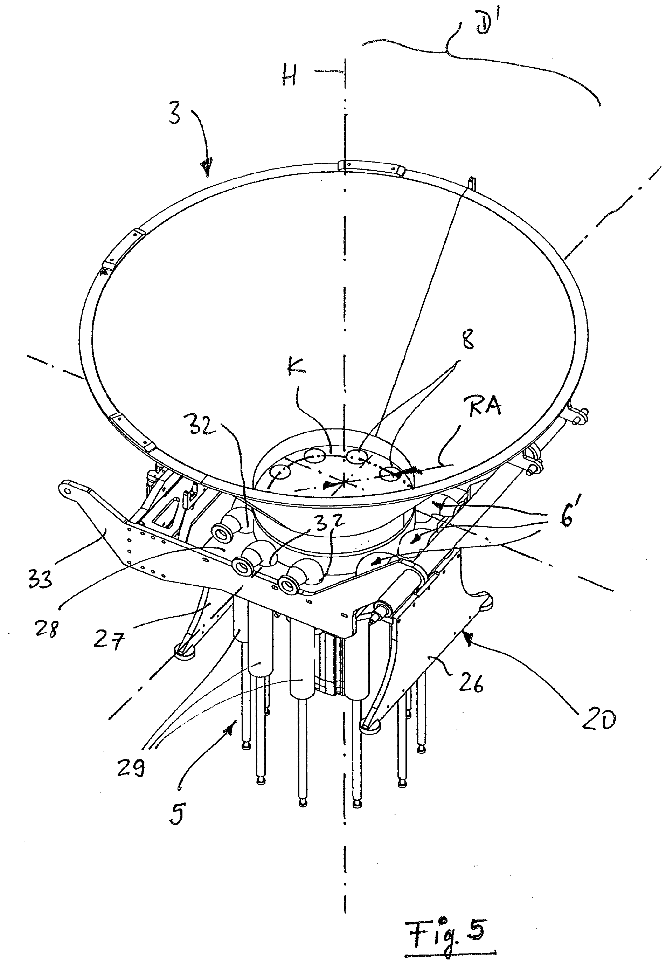

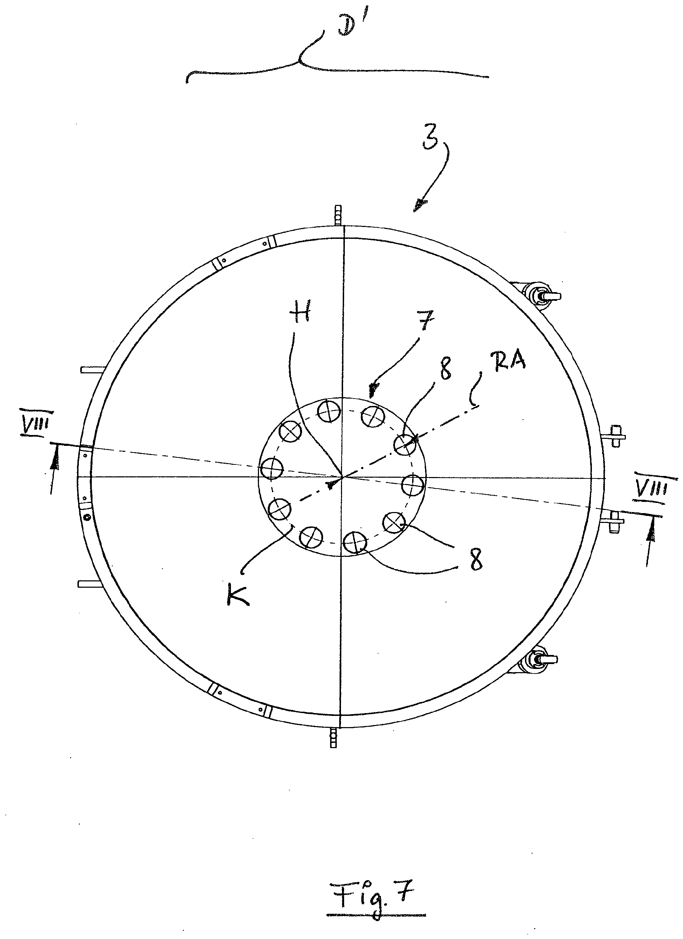

Das erfindungsgemäße Konzept des Dosieraggregates D geht von einem zur Abgabe des Produkts P vorgesehenen, eine oben liegende Einbauposition (Fig. 1) mit Hochachse H aufweisenden Speicherbehälter 3 aus. Dabei ist prinzipiell denkbar, dass das Produkt im Wesentlichen unter Schwerkraftwirkung in die weiteren Systemteile abgegeben werden kann. Dazu ist der Speicherbehälter 3 im Bereich seines Behälterbodens 7 (Fig. 7) mit zumindest einer, vorzugsweise mehreren der dargestellten Ausleitöffnungen 8 versehen (Fig. 5).

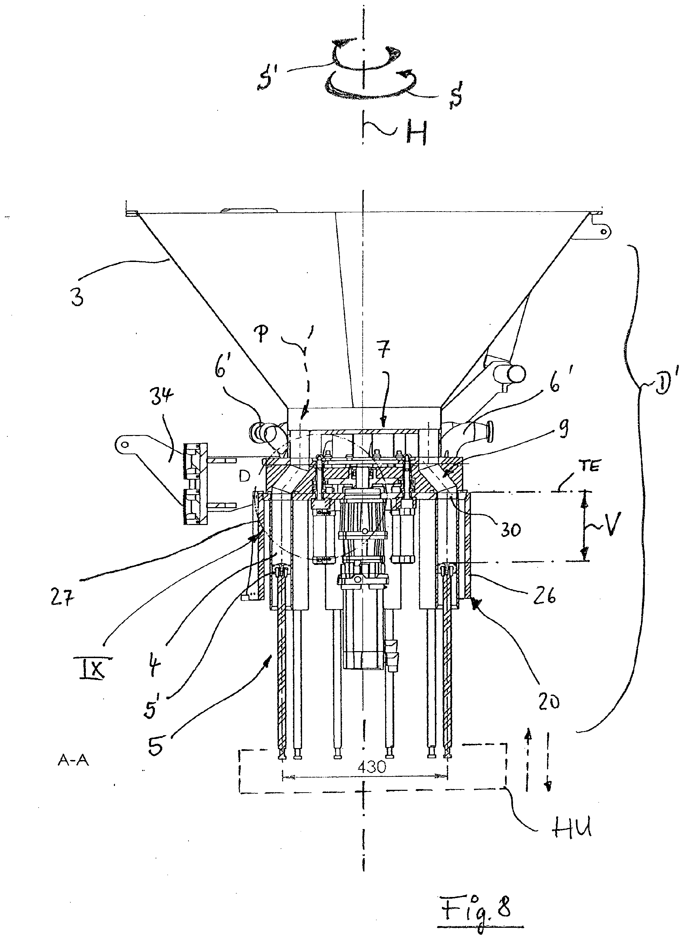

Aus den Schnittdarstellungen gemäß Fig. 3 und Fig. 4 sowie Fig. 8 und Fig. 9 wird deutlich, dass unterhalb des Behälterbodens 7 ein einen Produkteinlass 9 sowie einen Ausstoßdurchlass 10 aufweisender Verteilkörper 11 vorzugsweise in entgegengesetzten Richtungen schwenkverlagerbar (Pfeil S, S'; Hochachse H - Fig. 8) angeordnet ist. Diese auch als Dreh- bzw. Rotationsbewegung definierbare Stellbewegung des Verteilkörpers 11 erfolgt dabei um die vertikale Hochachse H des Systems.

Mit diesem vergleichsweise einfach aufgebauten Verteilkonzept wird erreicht, dass das den Produkteinlass 9 passierende Produkt P oberhalb des Stellkolbens 5' in den Dosierraum 4 eingeleitet und anschließend über den Ausstoßdurchlass 10 in die jeweilige Abführleitung 6 abgeleitet werden kann. Dieser Verfahrensablauf ist prinzipiell aus einer Zusammenschau der Darstellungen in Fig. 3 und Fig. 4 ersichtlich, wobei hier ein Dosieraggregat D dargestellt ist.

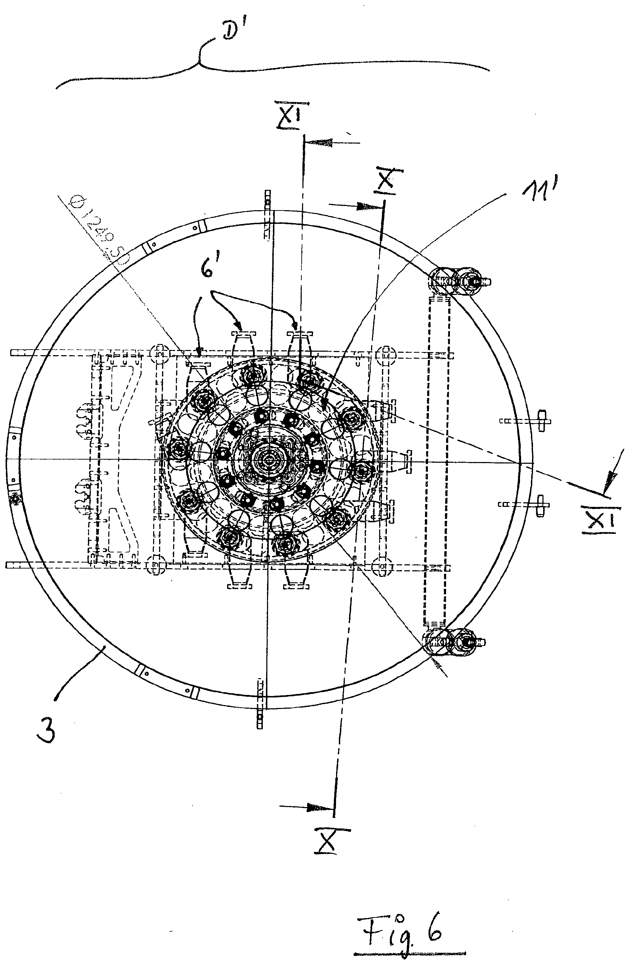

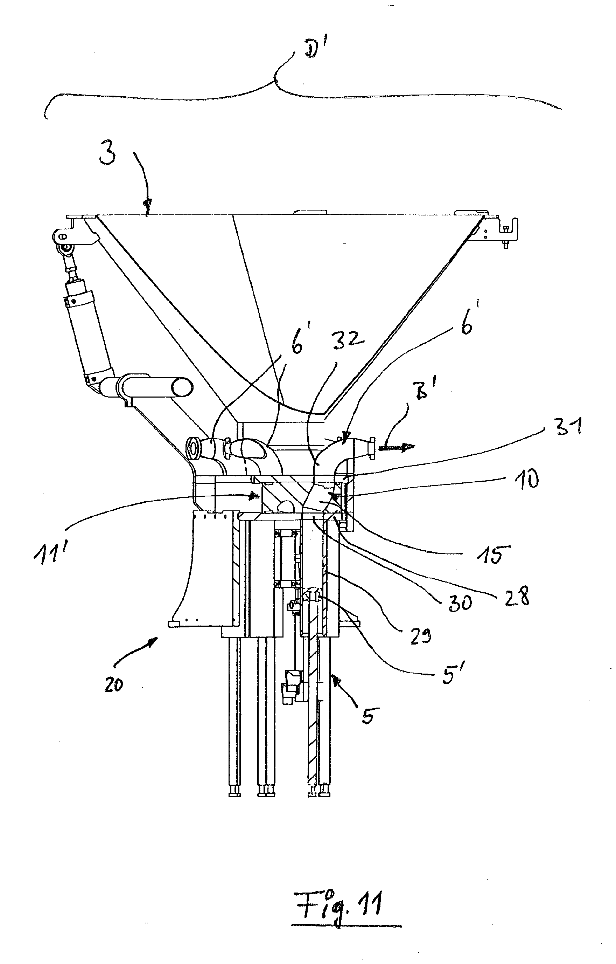

Bei dem Dosieraggregat D' gemäß Fig. 5 bis Fig. 11 wird das Produkt in oberhalb an den Verteilkörper 11 angesetzte Abführleitungen 6 ausgefördert (Fig. 11, Pfeil B'). Bei diesem nachfolgend näher beschriebenen System gemäß Fig. 5 bis Fig. 14 wird eine zweite Ausführung des Dosieraggregates D' erläutert, wobei dessen Abführleitungen 6' vorteilhaft sämtlich oberhalb des Verteilkörpers 11 vorgesehen sind. Denkbar ist auch, seitliche oder oben liegende Abführleitungen 6, 6' zu kombinieren (nicht dargestellt).

Für einen effektiven Einsatz des jeweiligen Dosieraggregates D, D' ist vorgesehen, dass dieses im Bereich des Behälterbodens 7 mit mehreren, den jeweiligen Durchlässen im Verteilkörper 11 zuzuordnenden Ausleitöffnungen 8 versehen ist (Fig. 5 bis Fig. 7). Diese Öffnungen 8 sind jeweils mit radialem Abstand RA zu der vertikalen Hochachse H des Systems angeordnet, so dass eine kreisförmige Positionierung K gebildet ist.

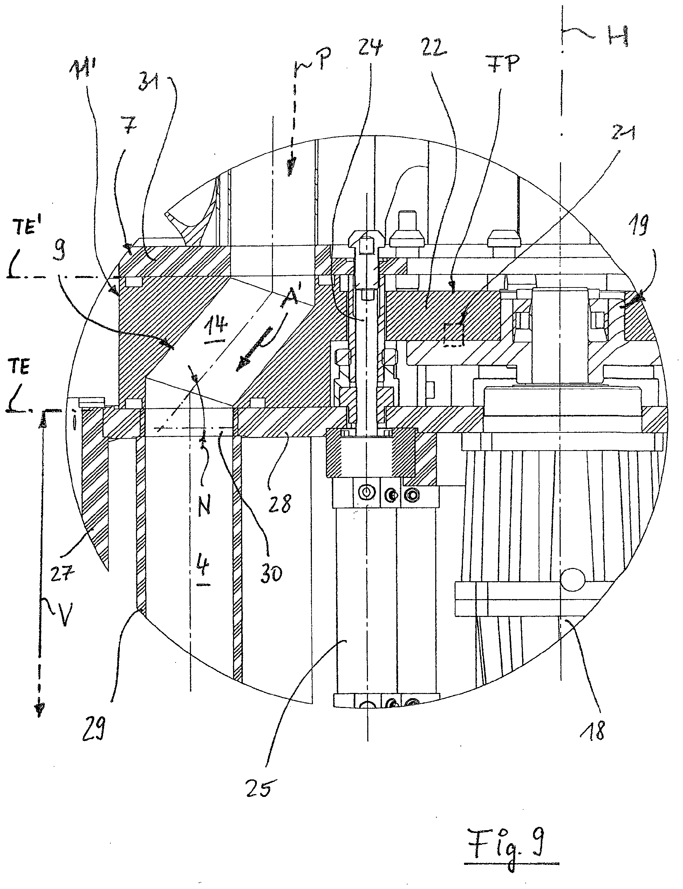

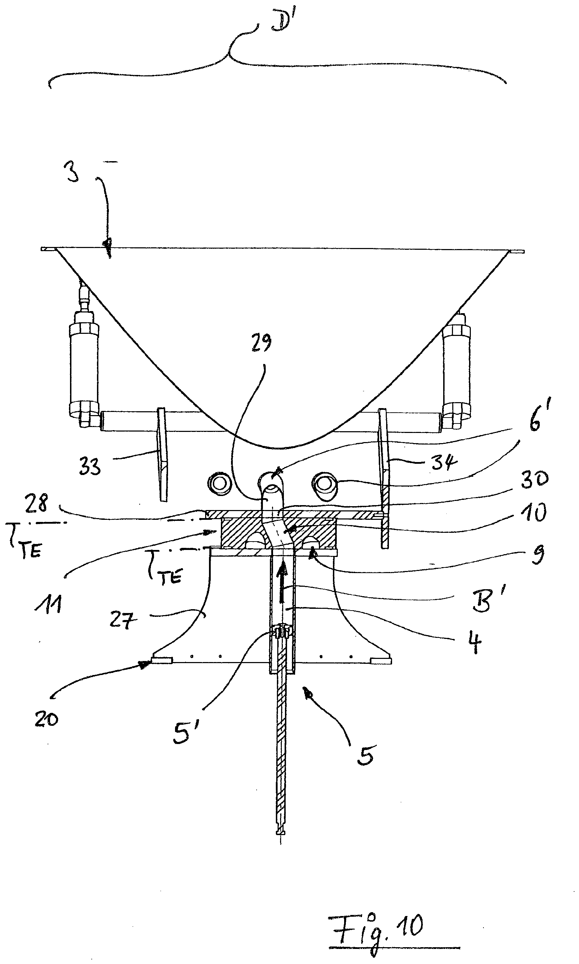

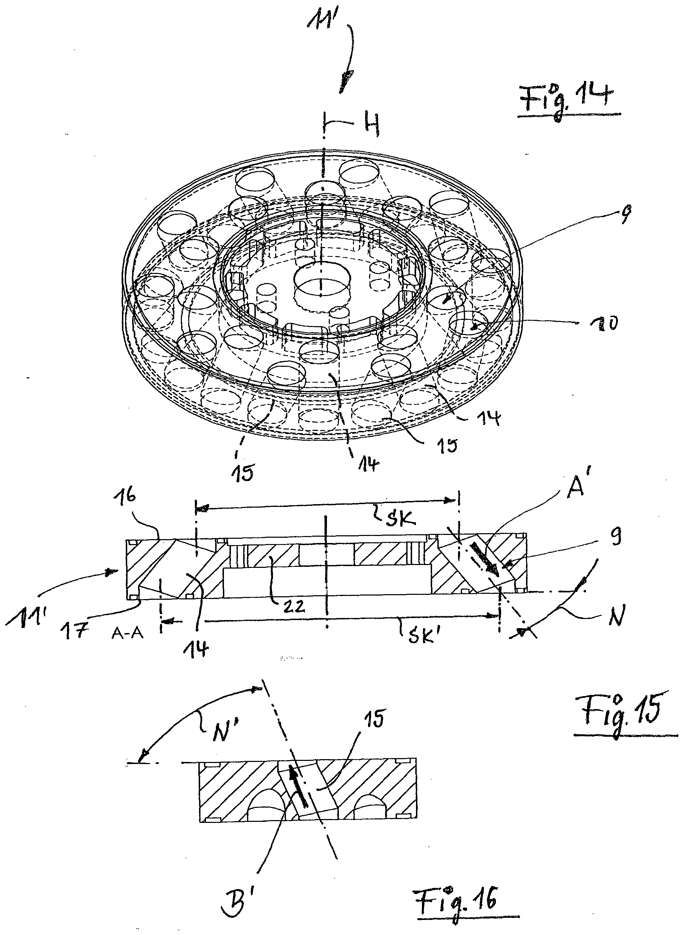

Die jeweiligen Funktions- und Wirkverbindungen im Bereich der unterhalb des Speicherbehälters 3 befindlichen Baugruppen sind darauf abgestellt, dass mittels einer die jeweiligen oberen Produkteinlässe 9 phasenweise abdeckenden Verlagerung des Verteilkörpers 11 - vorzugsweise die Schwenkverlagerung S, S' - eine zuvor nach unten in den Dosierraum 4 einförderbare Produktmenge (Pfeil A, Fig. 9) als jeweiliges Dosiervolumen V bereitgestellt wird. Gleichzeitig sind bei dieser Verlagerung S des Verteilkörpers 11 die in diesem vorgesehenen Ausstoßdurchlässe 10 oberhalb des jeweiligen Dosierraumes 4 positionierbar. Damit wird erreicht, dass nach einer Trennung des Produktstromes P das Verteilvolumen durch die Ausstoßdurchlässe 10 hindurch als das portionierte Dosiervolumen V (Fig. 8) mittels des jeweiligen Stellkolbens 5' in einer Wirkrichtung B' (Fig. 16) nach oben in die jeweilige Abführleitung 6' eingefördert werden kann (Fig. 10, Fig. 11).

Damit wird deutlich, dass der mit einer Vor- und Rückstellbewegung gemäß Pfeil S und S' schwenkgesteuerte Verteilkörper 11 jeweils phasenweise eine Füll- oder eine Ausstoßlage oberhalb der jeweiligen Dosierräume 4 definiert. Ausgehend von diesem optimalen Steuerkonzept ist vorgesehen, dass der Verteilkörper 11 auch mit einer in einer Richtung rotierenden Verbindungskonstruktion (nicht dargestellt) ausgeführt sein kann, so dass eine getaktete Drehbewegung - ohne Rückstellphase - zur Positionierung der Öffnungen und Kanäle nutzbar ist.

Bei dem Konzept der ersten Variante des Dosieraggregates D gemäß Fig. 2 - in Verbindung mit den Darstellungen in Fig. 3 und Fig. 4 - ist vorgesehen, dass die Produkteinlässe 9 sowie die in Schwenkrichtung S, S' nebengeordneten Ausstoßdurchlässe 10 jeweils als paarweise zusammenwirkende, im Wesentlichen zylindrische Leitkanäle 12, 12' angeordnet sind. Damit sind jeweilige, zur Hochachse H parallele Förderrichtungen A (Fig. 3) sowohl beim Zuführen (Produktpfeil P) aus dem Vorratsbehälter 3 als auch beim Ausstoßen (Förderrichtung B) in die Abführleitungen 6 (Fig. 4) vorgegeben. Dabei sind diese phasenweise zusammenwirkenden Leitkanal-Paare 12, 12' gemeinsam auf einem zur Hochachse H konzentrischen Schwenkkreis SK (Fig. 2) mit jeweils konstantem Bogenabstand BA angeordnet.

Aus der Darstellung gemäß Fig. 4 wird deutlich, dass der den Ausstoßdurchlass 10 bildende Leitkanal 12' jeweils mit einem von der radialen Umfangsseite des Verteilkörpers 11 nach außen gerichteten Formbogen 13 versehen ist, der in die hier jeweils seitlich angeschlossene Abführleitung 6 einmündet.

Ausgehend von der in Zusammenschau mit Fig. 3 und Fig. 4 vorbeschriebenen Ausführung des Dosieraggregates D gemäß Fig. 2 wird nachfolgend in Zusammenschau von Fig. 5 bis Fig. 16 - die eine Gesamtansicht des Dosieraggregates D' in Fig. 5 zeigt - eine zweite Systemvariante mit einem veränderten Verteilkörper 11' gezeigt. Dabei werden gleiche oder gleichwirkende Bauteile der Ausführung gemäß erstem Aggregat D nicht in jedem Fall nochmals einzeln beschrieben.

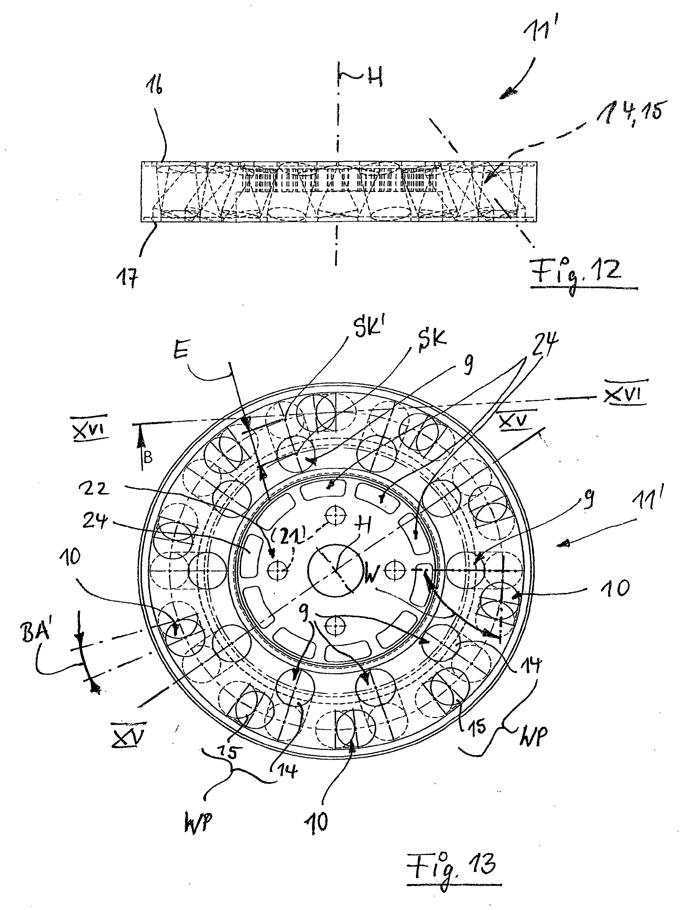

Das weiter optimierte System des Dosieraggregates D' sieht vor, dass die Produkteinlässe 9 sowie die Ausstoßdurchlässe 10 nunmehr in Form von jeweils zumindest bereichsweise eine geneigte Förderrichtung A' bzw. B' (Fig. 12, Fig. 13) in dem Verteilkörper 11' definierenden Leitkanälen 14 (Fig. 9) bzw. 15 (Fig. 11) vorgesehen sind. Diese Neigungen sind in Fig. 15 und Fig. 16 mit jeweiligen Winkeln N und N' prinzipiell veranschaulicht.

Aus einer Draufsicht des in Einzeldarstellung gemäß Fig. 13 gezeigten Verteilkörpers 11' wird deutlich, dass die auch hier jeweils - als Wirkpaare WP bezeichneten - paarweise mit dem Dosierraum 4 (Fig. 8) zusammenwirkenden Leitkanäle 14, 15 des Produkteinlasses 9 und des Ausstoßdurchlasses 10 jeweilige Förderrichtungen A' und B' aufweisen, die zusätzlich durch einen Winkelabstand W versetzt in den Verteilkörper 11 eingebracht sind. Mit diesem variabel ausführbaren Versatz-Konzept wird eine "dichtere Packung" der als jeweilige Dosier-Paarungen WP angeordneten Durchlässe 9 und 10 erreicht. Damit kann die in Umfangsrichtung des Verteilkörpers 11' vorgesehene Anzahl der anschließbaren Abführleitungen 6' optimiert werden.

Das Konzept mit dem veränderten Verteilkörper 11' in dem Dosieraggregat D' sieht damit insgesamt durch Schrägstellungen optimierbare Förderrichtungen für die Leitkanäle 14 und 15 vor. Die geneigte Förderrichtung A' der jeweiligen Produkteinlässe 9 sind vorzugsweise so ausgerichtet, dass deren jeweilige Einlassquerschnitte auf einem in Bezug zur Hochachse H inneren Schwenkkreis SK auf der Oberseite 16 des Verteilkörpers 11' liegen (Fig. 13, Fig. 14). Davon ausgehend definieren die zugeordneten Auslassquerschnitte der Produkteinlässe 9 einen radial beabstandeten äußeren Schwenkkreis SK' an der Unterseite 17 des Verteilkörpers 11', so dass in der Zusammenschau ein radialer Abstand E zwischen Einlassquerschnitt und Auslassquerschnitt gebildet ist (Fig. 13, linke Seite).

Es versteht sich, dass mit den geneigten Förderrichtungen B' der Ausstoßdurchlässe 10 ebenfalls jeweilige Einlass- und Auslassquerschnitte definiert werden. Diese verlaufen jedoch gegenüberliegend auf der Ober- und Unterseite 16, 17 des Verteilkörpers 11' so, dass eine Zuordnung nur zu dem gemeinsamen äußeren Schwenkkreis SK' vorliegt und hier in der Draufsicht betrachtet ein entsprechender Bogenabstand BA' besteht (Fig. 13).

Die weitere Optimierung des Steuerungskonzeptes beider Dosieraggregate D und D' - mit entgegen der Einförderung A, A' nach oben gerichteter Ausförderrichtung B, B' - sieht vor, dass der im zentralen Bereich der Hochachse H mit einem unterseitigen Antriebsmotor 18 (Fig. 8, Fig. 9) versehene Verteilkörper 11, 11' als eine spezifisch geformte, im Bereich eines Mitnehmers 19 mit dem Antriebsmotor 18 verbindbare Formplatte FP ausgebildet ist. Diese ist insbesondere mit einer die Systemteile tragenden Unterkonstruktion 20 (Fig. 5) so verbunden, dass für Säuberungs- und/oder Reparaturzwecke unterhalb des Speicherbehälters 3 eine einfache lösbare Verbindung bereitgestellt wird.

Das für die Schwenk-Verlagerung jeweiliger Dosiertakte vorgesehene Antriebs-System 18 ist so aufgebaut, dass die von jeweiligen Zapfenteilen 21 des Mitnehmers 19 formschlüssig erfassbare Formplatte FP mit einem zentralen Verbindungsteil 22 geformt ist. In diesem Verbindungsteil 22 des Verteilkörpers 11 sind jeweilige, das Bogenmaß der Schwenkverlagerung S, S' begrenzende und von einem Führungsbolzen 23 des Mitnehmers 19 durchgriffene Führungsnuten 24 (Fig. 13) vorgesehen. Für eine optimale Führung und Spannung dieser Systemteile im Betriebszustand ist vorgesehen, dass die Führungsbolzen 24 vorteilhaft mit zumindest einem diese in einer jeweiligen Funktionslage fixierenden oder lösenden Antriebsorgan 25 (Fig. 9) verbindbar sind.

Die Festlegung der Systemkomponenten erfolgt an der Unterkonstruktion 20, wobei diese in Form eines im Querschnitt nach unten offenen Hutprofil-Trägers (Fig. 5) vorgesehen ist. Ausgehend von jeweiligen Seitenplatten 26, 27 ist dessen obere Deckplatte 28 an einem radialen Außenbereich mit jeweiligen, die Verbindung zu dem unten liegenden Dosierraum 4 herstellenden Verbindungsöffnungen 30 (Fig. 9) versehen, in die die Zylinderrohre 29 der Förderorgane 5 einmünden.

Damit wird eine Konstruktion nutzbar, bei der die Mehrzahl der radial angeordneten Zylinderrohre 29 eine Bedienung des Systems nach Art einer feststehenden Dosierkammer-Struktur ermöglicht. Für die Bedienung kann dabei ein an den jeweiligen Stellkolben 5' wirkender Antrieb HU (Fig. 8) verwendet werden. Es versteht sich, dass mit diesem System sämtliche Stellkolben 5' der Förderorgane 5 im Bereich der Dosierräume 4 gleichzeitig verlagerbar sind.

Der als Formplatte FP ausgebildete Verteilkörper 11' wirkt auf seiner zum Behälterboden 7 gerichteten Oberseite 16 mit einer vorzugsweise am Speicherbehälter 3 festlegbaren Ringplatte 31 zusammen (Fig. 9). Aus dieser treten die jeweiligen rohrförmigen Ansätze 32 im Bereich der Anschlussbohrungen 33 aus, an denen die Abführleitungen 6, 6' anschließbar sind (Fig. 11).

Mit den vorbeschriebenen Ausführungsformen der Dosieraggregate D, D' wird insgesamt ein System geschaffen, mit dem die Produkte P weitgehend ohne zusätzliches Vakuum in jeweilige, an die Abführleitungen 6, 6' angeschlossene Dosierbehälter DB (Fig. 4) einförderbar sind. Dabei kann das Dosieraggregat D, D' als autarker Teil einer variabel ausrüstbaren Dosiermaschine ausgebildet werden.

Es hat sich gezeigt, dass eine schnelle Reinigung und/oder Desinfektion des Dosieraggregates D, D' dann möglich ist, wenn die zentralen Baugruppen im Bereich des Verteilkörpers 11 einfacher zugänglich sind. Deshalb sieht eine vorteilhafte Konstruktion des Systems vor, dass der mit dem Speicherbehälter 3 versehene obere Teil und der als Unterkonstruktion 20 bezeichnete untere Teil in zumindest einer Teilungsebene TE und/oder TE' voneinander lösbar sind (Fig. 9).

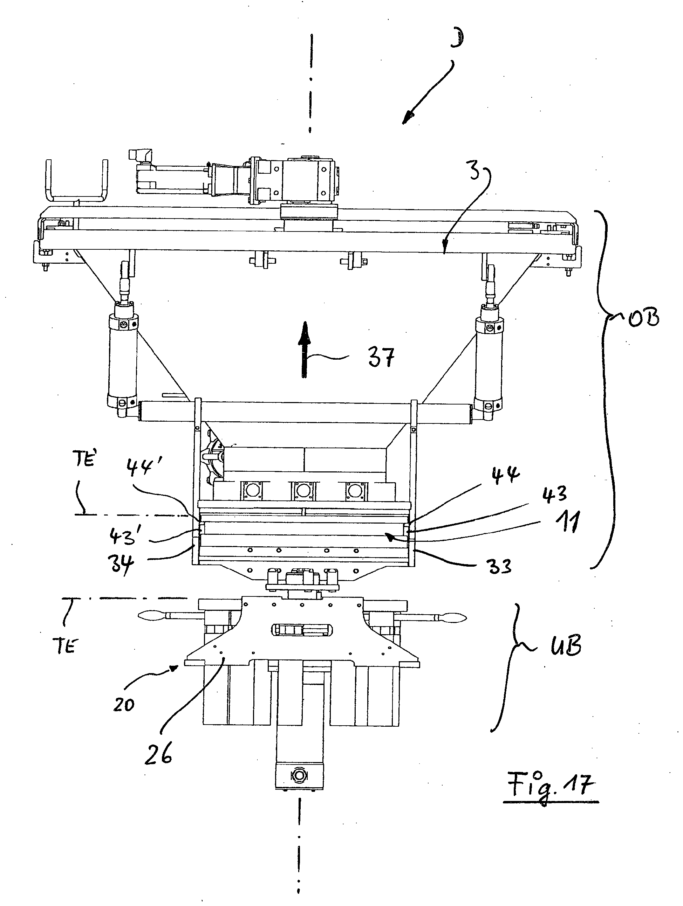

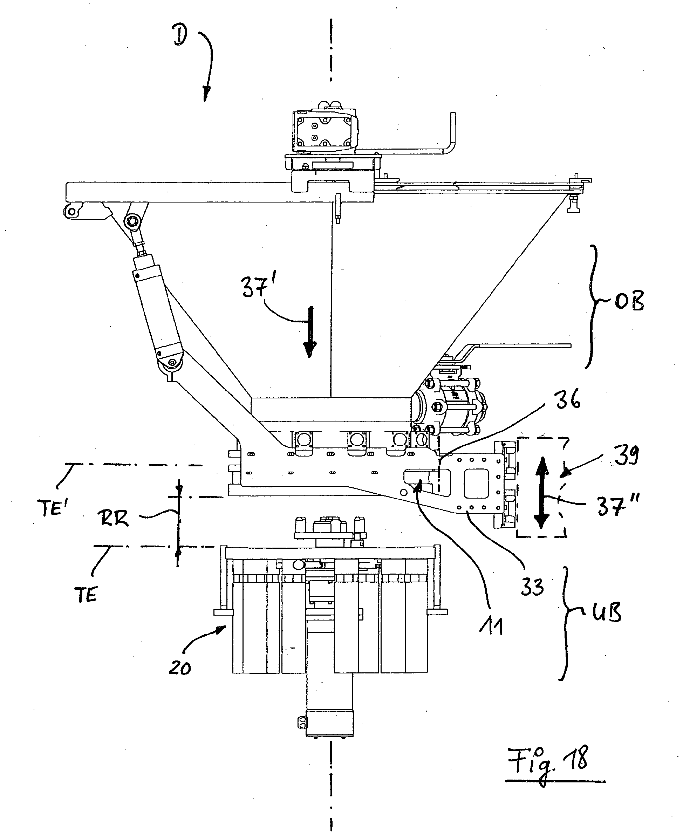

In Fig. 17 ist dieser gelöste Reinigungs-Zustand dargestellt, wobei die mit UB als Modul gekennzeichnete Unterkonstruktion 20 ortsfest gehalten ist (Fig. 1) und zu diesem der obere Teil OB - hier gemeinsam mit dem Verteilkörper 11 - mit einem Abstand RR (Fig. 18) abgehoben ist (Pfeil 37).

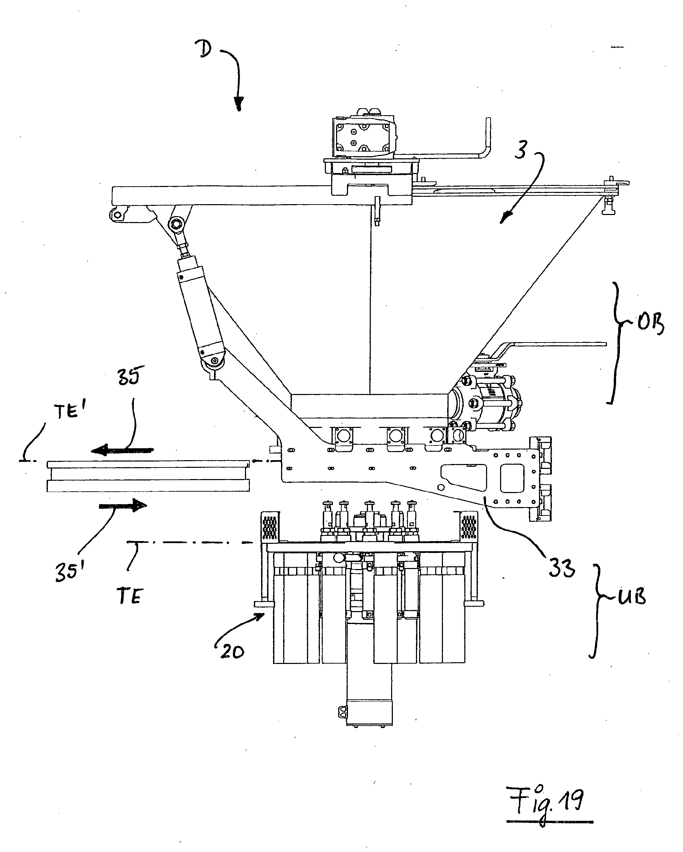

In dieser mit dem variablen Abstand RR einen Freiraum zur Reinigung bildenden Lage kann der Verteilkörper 11 auch zumindest bereichsweise aus dem System herausbewegt (Pfeil 35; Fig. 19) und einfacher gereinigt werden. In der dargestellten Variante (Fig. 19) ist eine vollständige Entnahme des Verteilkörpers 11 vorgesehen, so dass dieser als Einzelteil zur Reinigung handhabbar ist.

In einer vorteilhaft einfachen Ausführung ist zur Durchführung des Entnahmevorgangs eine seitliche Nut-Feder-Verbindung vorgesehen, die eine Abstützung mit jeweiligen seitlichen Nutprofilen 43, 43' und Federteilen 44, 44' aufweist. Damit ist der Verteilkörper 11 entlang von gegenüberliegenden Rahmenschenkeln 33, 34 verschiebbar geführt. Bei der Rückverlagerung (Pfeil 35; Fig. 18) wird der Verteilkörper 11 in einer hinteren Anlageposition 36 (Fig. 18) positionsgenau eingerastet. Dabei kann eine Kontrolle mittels Sensor (nicht dargestellt) vorgesehen werden. Nach einer die funktionsgerechte Lage des Verteilkörpers 11 bestätigenden Signalauslösung kann dann der Behälter 3 - mitsamt dem Verteilkörper 11 - wieder in die Arbeitsstellung absenkt werden (Pfeil 37').

Für die Herstellung des Abstands RA (Fig. 18) zwischen den beiden Teilbereichen OB und UB des Systems ist eine mit zumindest einem Hubzylinder 38 o. dgl. Antriebsorganen versehene Stellbaugruppe 39 (Fig. 1) vorgesehen. An deren Tragsäule 40 sind die beiden, den oberen Teil OB des Systems erfassenden Rahmenschenkel 33, 34 mittels seitlicher Schienenprofile 41, 42 (Fig. 8) geführt. Damit kann der in Fig. 17 bis Fig. 19 ersichtliche Abstand RR vorteilhaft stufenlos eingestellt werden (Pfeil 37", Fig. 18).

## Patentansprüche

1. Dosieraggregat mit einem schütt- oder fließfähige Produkte aufnehmenden Speicherbehälter (3), mehreren vorzugsweise zylinderförmigen Dosierräumen (4) und mit mehreren als Stellkolben (5') ausgebildeten Förderorganen (5), wobei der Speicherbehälter (3) derart mit den Dosierräumen (4) verbindbar ist, dass jeweils aus diesem Dosierraum (4) mittels eines der Förderorgane (5) eine ein Dosiervolumen definierende Teilmenge des Produkts (P') portionsweise in jeweils eine Abführleitung (6) des Dosieraggregats überführbar ist, wobei der zur Abgabe des Produkts (P) vorgesehene Speicherbehälter (3) im Bereich seines Behälterbodens (7) mit mehreren Ausleitöffnungen (8) versehen ist, **dadurch gekennzeichnet, dass** unterhalb dieses Behälterbodens (7) ein jeweilige mit den Ausleitöffnungen (8) korrespondierender, Produkteinlässe (9) sowie jeweilige Ausstoßdurchlässe (10) aufweisender Verteilkörper (11, 11') des Dosieraggregats verlagerbar angeordnet ist, derart, dass das die jeweiligen Produkteinlässe (9) passierende Produkt (P') oberhalb der Stellkolben (5') in die Dosierräume (4) einleitbar und anschließend über die jeweiligen Ausstoßdurchlässe (10) in die Abführleitungen (6, 6') ausförderbar ist.

2. Dosieraggregat nach Anspruch 1, **dadurch gekennzeichnet, dass** die im Bereich des unteren Behälterbodens (7) mit den jeweiligen Ausstoßdurchlässen (10) im Verteilkörper (11, 11') korrespondierenden Ausleitöffnungen (8) jeweils mit radialem Abstand (RA) zu einer vertikalen Hochachse (H) des Systems angeordnet sind.

3. Dosieraggregat nach Anspruch 1 oder 2, **dadurch gekennzeichnet, dass** mittels einer die jeweiligen oberen Produkteinlässe (9) phasenweise abdeckenden Verlagerung (Pfeil S, S') des Verteilkörpers (11, 11') eine zuvor nach unten in den Dosierraum (4) einförderbare Produktmenge (P) als jeweiliges Dosiervolumen (V) abteilbar ist und gleichzeitig bei dieser Verlagerung des Verteilkörpers (11, 11') die in diesem vorgesehenen Ausstoßdurchlässe (10) oberhalb des jeweiligen Dosierraumes (4) positionierbar sind, derart, dass durch die Ausstoßdurchlässe (10) hindurch das portionierte Dosiervolumen (V) mittels des jeweiligen Stellkolbens (5') nach oben in Abführleitungen (6, 6') einförderbar ist.

4. Dosieraggregat nach einem der Ansprüche 1 bis 3, **dadurch gekennzeichnet, dass** der mit einer Vor- und Rückstellbewegung (S, S') schwenkgesteuerte Verteilkörper (11, 11') jeweils phasenweise eine Füll- oder eine Ausstoßlage oberhalb der Dosierräume (4) definiert.

5. Dosieraggregat nach einem der Ansprüche 1 bis 3, **dadurch gekennzeichnet, dass** der Verteilkörper (11, 11') drehbar ist.

6. Dosieraggregat nach einem der Ansprüche 1 bis 5, **dadurch gekennzeichnet, dass** die Produkteinlässe (9) sowie die Ausstoßdurchlässe (10) jeweils als paarweise zusammenwirkende zylindrische Leitkanäle (12, 12') mit im Wesentlichen zur Hochachse (H) paralleler Förderrichtung (A, B) in den Verteilkörper (11) eingebracht sind und diese Leitkanal-Paare (12, 12') gemeinsam auf einem zur Hochachse (H) konzentrischen Schwenkkreis (SK) mit jeweils konstantem Bogenabstand (BA) im Verteilkörper (11) angeordnet sind.

7. Dosieraggregat nach Anspruch 6, **dadurch gekennzeichnet, dass** der den Ausstoßdurchlass (10) bildende Leitkanal (12') mit einem von der radialen Umfangsseite des Verteilkörpers (11) nach außen gerichteten Formbogen (13) versehen ist, der in die Abführleitung (6) einmündet.

8. Dosieraggregat nach einem der Ansprüche 1 bis 5, **dadurch gekennzeichnet, dass** die Produkteinlässe (9) sowie die Ausstoßdurchlässe (10) jeweils als zumindest bereichsweise eine geneigte Förderrichtung (A', B') in dem Verteilkörper (11') definierende Leitkanäle (14, 15) vorgesehen sind.

9. Dosieraggregat nach Anspruch 8, **dadurch gekennzeichnet, dass** die jeweils paarweise (WP) mit dem Dosierraum (4) zusammenwirkenden Leitkanäle (14, 15) von Produkteinlass (9) und Ausstoßdurchlass (10) jeweilige, durch einen Winkelabstand (W) versetzte Förderrichtungen (A', B') aufweisen.

10. Dosieraggregat nach Anspruch 8 oder 9, **dadurch gekennzeichnet, dass** die geneigten Förderrichtungen (A') der jeweiligen Produkteinlässe (9) so ausgerichtet sind, dass deren jeweilige Einlassquerschnitte auf einem in Bezug zur Hochachse (H) inneren Schwenkkreis (SK) auf der Oberseite (16) des Verteilkörpers (11') liegen und die zugeordneten Auslassquerschnitte einen radial beabstandeten äußeren Schwenkkreis (SK') an der Unterseite (17) des Verteilkörpers (11) definieren, derart, dass ein radialer Abstand (E) zwischen Einlassquerschnitt und Auslassquerschnitt gebildet ist.

11. Dosieraggregat nach einem der Ansprüche 8 bis 10, **dadurch gekennzeichnet**, das mit den geneigten Förderrichtungen (B') der Ausstoßdurchlässe (10) ebenfalls jeweilige Einlass- und Auslassquerschnitte gebildet sind, diese jedoch gegenüberliegend auf der Ober- und Unterseite (16, 17) des Verteilkörpers (11') nur dem gemeinsamen äußeren Schwenkkreis (SK') zugeordnet sind und einen Bogenabstand (BA') aufweisen.

12. Dosieraggregat nach einem der Ansprüche 1 bis 11, **dadurch gekennzeichnet, dass** der im zentralen Bereich der Hochachse (H) mit einem unterseitigen Antriebsmotor (18) versehene Verteilkörper (11, 11') als eine im Bereich eines Mitnehmers (19) gehaltene Formplatte (FP) ausgebildet ist, die mit einer die Systemteile tragenden Unterkonstruktion (20) des Dosieraggregats (D) lösbar verbindbar ist.

13. Dosieraggregat nach Anspruch 12, **dadurch gekennzeichnet, dass** die von jeweiligen Zapfenteilen (21) des Mitnehmers (19) formschlüssig erfassbare Formplatte (FP) einen zentralen Verbindungsteil (22) aufweist, in dem jeweilige, das Bogenmaß der Schwenkverlagerung (S, S') begrenzende und von einem Führungsbolzen (23) des Mitnehmers (19) durchgriffene Führungsnuten (24) vorgesehen sind.

14. Dosieraggregat nach Anspruch 12 oder 13, **dadurch gekennzeichnet, dass** die Führungsbolzen (23) mit zumindest einem diese in einer jeweiligen Funktionslage fixierenden oder lösenden Antriebsorgan (25) verbunden sind.

15. Dosieraggregat nach einem der Ansprüche 12 bis 14, **dadurch gekennzeichnet, dass** die Unterkonstruktion (20) des Systems mit einem im Querschnitt nach unten offenen Hutprofil-Träger versehen ist, dessen obere Deckplatte (28) an einem radialen Außenbereich jeweilige, in die Dosierräume (4) von Zylinderrohren (29) einmündende Verbindungsöffnungen (30) aufweist.

16. Dosieraggregat nach Anspruch 15, **dadurch gekennzeichnet, dass** mit dem Zylinderrohr (29) ein System nach Art von feststehenden Dosierkammern herstellbar ist.

17. Dosieraggregat nach einem der Ansprüche 12 bis 16, **dadurch gekennzeichnet, dass** sämtliche Stellkolben (5') im Bereich der Dosierräume (4) gleichzeitig verlagerbar sind.

18. Dosieraggregat nach einem der Ansprüche 12 bis 17, **dadurch gekennzeichnet, dass** der als Formplatte (FP) ausgebildete Verteilkörper (11') auf seiner zum Behälterboden (7) gerichteten Oberseite (16) eine mit dem Speicherbehälter (3) verbundene Ringplatte (31) aufweist, aus der die jeweiligen rohrförmigen Ansätze der Abführleitung (6') austreten.

19. Dosieraggregat nach einem der Ansprüche 1 bis 18, **dadurch gekennzeichnet, dass** das Dosieraggregat (D, D') im Bereich zwischen Speicherbehälter (3) und Unterkonstruktion (20) zumindest eine Teilungsebene (TE, TE') aufweist, derart, dass mit diesem modulartigen Aufbau ein zu Reinigungszwecken nutzbarer Zwischenraum mit Abstand (RR) herstellbar ist (Pfeil 37, 37').

20. Dosieraggregat nach einem der Ansprüche 1 bis 19, **dadurch gekennzeichnet, dass** zumindest der Verteilkörper (11) als Einzelteil aus seiner Einbaulage lösbar ist, derart, dass der Verteilkörper (11) durch eine Schub- oder Schwenkverlagerung (35, 35') in eine Reinigungsposition überführbar und aus dieser rückführbar gehalten ist.

21. Dosieraggregat nach einem der Ansprüche 1 bis 20, **dadurch gekennzeichnet, dass** dieses eine die Produkte im Wesentlichen ohne zusätzliches Vakuum in jeweilige, an die Abführleitungen (6, 6') anschließende Dosierbehältnisse (DB) einfördernde Einheit bildet.

22. Dosiermaschine, **gekennzeichnet durch** ein Dosieraggregat nach einem der Ansprüche 1 bis 21, wobei das Dosieraggregat (D, D') als autarker Teil der variabel ausrüstbaren Dosiermaschine (DM) vorgesehen ist.

## Claims

1. Metering unit comprising a storage container (3) that receives bulk or flowable products, a plurality of preferably cylindrical metering chambers (4), and a plurality of conveying members (5) that are designed as set pistons (5'), the storage container (3) being able to be connected to the metering chambers (4) such that some of the product (P'), defining a metering volume, can in each case be transferred in portions from said metering chamber (4) into one removal line (6) of the metering unit, by means of one of the conveying members (5), the storage container (3) provided for delivering the product (P) being provided with a plurality of discharge openings (8) in the region of the container base (7) thereof, **characterised in that** a distributor body (11, 11') of the metering unit that comprises respective product inlets (9) corresponding to the discharge openings (8) and respective output passages (10) is displaceably arranged under said container base (7) in such a way that the product (P') passing through the respective product inlets (9) can be introduced into the metering chambers (4) above the set pistons (5') and can subsequently be conveyed out into the removal lines (6, 6') via the respective output passages (10).

2. Metering unit according to claim 1, **characterised in that** the discharge openings (8) that are in the region of the bottom container base (7) and correspond to the respective output passages (10) in the distributor body (11, 11') are each arranged at a radial spacing (RA) from a vertical axis (H) of the system.

3. Metering unit according to either claim 1 or claim 2, **characterised in that** an amount of product (P) that could previously be conveyed downwards into the metering chamber (4) can be separated as a relevant metering volume (V) by means of a displacement (arrow S, S') of the distributor body (11, 11') that covers the respective upper product inlets (9) in phases, and, simultaneously, during said displacement of the distributor body (11, 11'), the output passages (10) provided therein can be positioned above the relevant metering chamber (4) such that the portioned metering volume (V) can be conveyed upwards in removal lines (6, 6'), through the output passages (10), by means of the relevant set piston (5').

4. Metering unit according to any of claims 1 to 3, **characterised in that** the distributor body (11, 11') that is pivotably controlled by means of an advance and return movement (S, S') in each case defines a filling or output position above the metering chambers (4) in phases.

5. Metering unit according to any of claims 1 to 3, **characterised in that** the distributor body (11, 11') is rotatable.

6. Metering unit according to any of claims 1 to 5, **characterised in that** the product inlets (9) and the output passages (10) are each inserted into the distributor body (11) as cylindrical guide channels (12, 12') that cooperate in pairs and have a conveying direction (A, B) that is substantially in parallel with the vertical axis (H), and said guide channel pairs (12, 12') are jointly arranged in the distributor body (11) on a pivot circle (SK) concentric with the vertical axis (H) and at a constant arcuate spacing (BA) in each case.

7. Metering unit according to claim 6, **characterised in that** the guide channel (12') that forms the output passage (10) is provided with a shaped bend (13) which is oriented outwards from the radial peripheral side of the distributor body (11) and leads into the removal line (6).

8. Metering unit according to any of claims 1 to 5, **characterised in that** the product inlets (9) and the output passages (10) are each provided as guide channels (14, 15) that define an inclined conveying direction (A', B') in the distributor body (11') at least in regions.

9. Metering unit according to claim 8, **characterised in that** the guide channels (14, 15) of the product inlet (9) and output passage (10) that each cooperate in pairs (WP) with the metering chamber (4) have respective conveying directions (A', B') that are offset by an angular distance (W).

10. Metering unit according to either claim 8 or claim 9, **characterised in that** the inclined conveying directions (A') of the respective product inlets (9) are oriented such that the respective inlet cross sections thereof are located on the upper face (16) of the distributor body (11') on a pivot circle (SK) that is internal with respect to the vertical axis (H), and the associated outlet cross sections define a radially spaced outer pivot circle (SK') on the bottom (17) of the distributor body (11) such that a radial spacing (E) is formed between the inlet cross section and the outlet cross section.

11. Metering unit according to any of claims 8 to 10, **characterised in that** the inclined conveying directions (B') of the output passages (10) also form respective inlet and outlet cross sections, but said cross sections are associated with just one common outer pivot circle (SK') so as to be opposite on the upper and lower face (16, 17) of the distributor body (11'), and have an arcuate spacing (BA').

12. Metering unit according to any of claims 1 to 11, **characterised in that** the distributor body (11, 11') that is provided with a bottom drive motor (18) in the central region of the vertical axis (H) is formed as a moulded plate (FP) that is retained in the region of a carrier (19) and can be releasably connected to a substructure (20) of the metering unit (D) that carries the system parts.

13. Metering unit according to claim 12, **characterised in that** the moulded plate (FP) that can be grasped in an interlocking manner by respective pin parts (21) of the carrier (19) comprises a central connecting part (22) in which respective guide grooves (24) are provided that define the radian measure of the pivoting displacement (S, S') and are penetrated by a guide bolt (23) of the carrier (19).

14. Metering unit according to either claim 12 or claim 13, **characterised in that** the guide bolts (23) are connected to at least one of said drive members (25) that are either securing or releasing in the respective functional positions.

15. Metering unit according to any of claims 12 to 14, **characterised in that** the substructure (20) of the system is provided with a support having a top-hat profile that is open at the bottom in cross section, the upper cover plate (28) of which support comprises, in a radial outer region, respective connection openings (30) that lead into the metering chambers (4) of cylinder tubes (29).

16. Metering unit according to claim 15, **characterised in that** a system of the stationary metering chamber type can be produced by the cylinder tube (29).

17. Metering unit according to any of claims 12 to 16, **characterised in that** all the set pistons (5') can be displaced at the same time in the region of the metering chambers (4).

18. Metering unit according to any of claims 12 to 17, **characterised in that** the distributor body (11') that is formed as a moulded plate (FP) comprises, on the upper face (16) thereof that is oriented towards the container base (7), an annular plate (31) which is connected to the storage container (3) and from which the respective tubular extensions of the removal line (6') emerge.

19. Metering unit according to any of claims 1 to 18, **characterised in that** the metering unit (D, D') comprises at least one dividing plane (TE, TE') in the region between the storage container (3) and the substructure (20), such that a gap having a spacing (RR) that can be used for cleaning purposes can be produced by means of said modular construction (arrow 37, 37').

20. Metering unit according to any of claims 1 to 19, **characterised in that** at least the distributor body (11) can be released, as a separate part, from the installation position thereof, such that the distributor body (11) can be transferred into a cleaning position, by means of pushed or pivoted displacement (35, 35'), and can be retained such that it can be returned from said cleaning position.

21. Metering unit according to any of claims 1 to 20, **characterised in that** it forms a unit that conveys the products into respective metering containers (DB) connected to the removal lines (6, 6'), substantially without any additional vacuum.

22. Metering machine, **characterised by** a metering unit according to any of claims 1 to 21, the metering unit (D, D') being provided as an autonomous part of the metering machine (DM), which can be equipped in various different ways.

## Revendications

1. Unité de dosage comprenant un réservoir (3) destiné à recevoir des produit en vrac ou fluide réservoir, une pluralité de chambres de dosage de (4) préférence cylindriques et une pluralité d'éléments de transport (5) réalisés sous la forme de pistons de commande, le réservoir (3) pouvant être relié aux chambres de dosage (4) de telle sorte qu'une partie du produit (P') définissant un volume de dosage peut être transférée par portions à chaque fois de cette chambre de dosage (4) jusque dans un conduit d'évacuation (6) de l'unité de dosage au moyen de l'un des éléments de transport (5), le réservoir (3) prévu pour délivrer le produit (P) étant pourvu au niveau de son fond (7) d'une pluralité d'ouvertures de sortie (8), **caractérisée en ce qu'**un corps de distribution respectif (11, 11') de l'unité de dosage, comprenant des entrées de produit (9) correspondant aux orifices de sortie (8) et des passages d'éjection respectifs (10), est disposé de manière mobile au-dessous de ce fond (7) de telle sorte que le produit (P') passant par les entrées de produit respectives (9) peut être introduit dans les chambres de dosage (4) au-dessus des pistons de commande (5') puis peut être évacué dans les conduits d'évacuation (6, 6') par les passages d'éjection (10) .

2. Unité de dosage selon la revendication 1, **caractérisée en ce que** les orifices de sortie (8) correspondant aux passages d'éjection respectifs ménagés dans le corps de distribution (11, 11') au niveau du fond inférieur (7) du réservoir sont disposés chacun à une distance radiale (RA) d'un axe vertical (H) du système.

3. Unité de dosage selon la revendication 1 ou 2, **caractérisée en ce que**, au moyen d'un déplacement (flèche S, S') du corps de distribution (11, 11') qui couvre par phases les entrées de produit supérieurs respectifs (9), une quantité de produit (P) pouvant être transportée d'abord vers le bas jusque dans la chambre de dosage (4) peut divisé en volume de dosage respectif (V) et en même temps, pendant ce déplacement du corps de distribution (11, 11'), les passages d'éjection (10) prévus dans celui-ci peuvent être positionnés au-dessus de la chambre de dosage respective (4) de telle sorte que le volume de dosage portionné (V) peut être transporté vers le haut à travers les passages d'éjection (10) jusque dans les conduits d'évacuation (6, 6') au moyen du piston de commande respectif (5').

4. Unité de dosage selon l'une des revendications 1 à 3, **caractérisée en ce que** le corps de distribution (11, 11'), dont le pivotement est commandé avec un mouvement d'avance et de recul (S, S'), définit à chaque fois par phase une position de remplissage ou d'éjection au-dessus des chambres de dosage (4).

5. Unité de dosage selon l'une des revendications 1 à 3, **caractérisée en ce que** le corps de distribution (11, 11') peut tourner.

6. Unité de dosage selon l'une des revendications 1 à 5, **caractérisée en ce que** les orifices d'entrée de produit (9) et les passages d'éjection (10) sont chacun ménagées dans le corps de distribution (11) sous forme de canaux de guidage cylindrique (12, 12') qui coopèrent par paires et dont la direction de transport (A, B) est sensiblement parallèle à l'axe vertical (H) et ces paires de canaux de guidage (12, 12') sont disposés dans le corps de distribution (11) ensemble sur un cercle de pivotement (SK), concentrique à l'axe vertical (H), à une distance de courbure mutuelle constante (BA).

7. Unité de dosage selon la revendication 6, **caractérisée en ce que** le canal de guidage (12'), formant le passage d'éjection (10), présente une courbure qui est dirigée vers l'extérieur depuis le côté périphérique radial du corps de distribution (11) et qui débouche dans le conduit d'évacuation (6).

8. Unité de dosage selon l'une des revendications 1 à 5, **caractérisée en ce que** les entrée de produit (9) et les passages d'éjection (10) sont prévus chacun sous la forme de canaux de guidage (14, 15) définissant dans le corps de distribution (11') au moins par zones une direction de transport inclinée (A', B').

9. Unité de dosage selon la revendication 8, **caractérisée en ce que** les canaux de guidage (14, 15) coopérant à chaque fois par paires (WP) avec la chambre de dosage (4) présentent des directions de transport respectives (A', B') décalées d'une distance angulaire (W) de l'entrée de produit (9) et du passage d'éjection (10).

10. Unité de dosage selon la revendication 8 ou 9, **caractérisée en ce que** les directions de transport inclinées (A') des entrées de produit respectives (9) sont alignées de telle sorte que leurs sections d'entrée transversales respectives sont placées sur un cercle de pivotement intérieur (SK), par rapport à l'axe vertical (H), du côté supérieur (16) du corps de distribution (11') et les sections de sortie associées définissent un cercle de pivotement (SK') extérieur espacé radialement du côté inférieur (17) du corps de distribution (11) de telle sorte qu'une distance radiale (E) est formée entre la section d'entrée et la section de sortie.

11. Unité de dosage selon l'une des revendications 8 à 10, **caractérisée en ce que** des sections d'entrée et de sortie respectives sont également formées avec les directions de transport inclinées (B') des passages d'éjection (10), mais celles sont associées en étant opposées du côté supérieur et du côté inférieur (16, 17) du corps de distributions (11') uniquement au cercle de pivotement extérieur commun (SK') et présentent une distance de courbure (BA').

12. Unité de dosage selon l'une des revendications 1 à 11, **caractérisée en ce que** le corps de distribution (11, 11'), pourvu d'un moteur d'entraînement côté inférieur (18) dans la zone centrale de l'axe vertical (H), est sous la forme d'une plaque moulée (FP) qui est supportée au niveau d'un entraîneur 19) et qui peut être reliée de manière amovible à une infrastructure (20) de l'unité de dosage (D) qui porte les éléments du système.

13. Unité de dosage selon la revendication 12, **caractérisée en ce que** la plaque moulée (FP), pouvant être prise par complémentarité de formes par des éléments formant pivot respectifs (21) de l'entraîneur (19) comporte un élément de liaison central (22) dans lequel sont ménagées des rainures de guidage (24) délimitant la courbure du déplacement par pivotement (S, S') et traversé par un boulon de guidage (23) de l'entraîneur (19).

14. Unité de dosage selon la revendication 12 ou 13, **caractérisée en ce que** les boulons de guidage (23) sont reliés à au moins un élément d'entraînement (25) fixant ceux-ci dans une position fonctionnelle respective ou les libérant de celle-ci.

15. Unité de dosage selon l'une des revendications 12 à 14, **caractérisée en ce que** l'infrastructure (20) du système est munie d'un support à profil de chapeau, ouvert vers le bas en coupe transversale, dont la plaque de recouvrement supérieure (28) comporte, au niveau d'une zone extérieure radiale, des ouvertures de liaison (30) débouchant dans les chambres de dosage (4) de tubes cylindriques (29).

16. Unité de dosage selon la revendication 15, **caractérisée en ce qu'**un système peut être fabriqué avec le tube cylindrique (29) à la manière de chambres de dosage fixes.

17. Unité de dosage selon l'une des revendications 12 à 16, **caractérisée en ce que** tous les pistons de commande (5') sont déplaçables simultanément au niveau des chambres de dosage (4) .

18. Unité de dosage selon l'une des revendications 12 à 17, **caractérisée en ce que** le corps de distribution (11') conçu sous la forme de la plaque moulée (FP) comporte du côté supérieur (16), dirigée vers le fond (7) du réservoir, une plaque annulaire (31), reliée au réservoir (3), de laquelle sort les embouchures tubulaires respectives du conduit d'évacuation (6').

19. Unité de dosage selon l'une des revendications 1 à 18, **caractérisée en ce que** l'unité de dosage (D, D') comporte dans la zone située entre le réservoir (3) et l'infrastructure (20) au moins un plan de séparation (TE, TE') de sorte que cette structure modulaire permet de réaliser à une distance (RR) (flèche 37, 37') un espace intermédiaire utilisable pour le nettoyage.

20. Unité de dosage selon l'une des revendications 1 à 19, **caractérisée en ce qu'**au moins le corps de distribution (11) est libérable d'une seule pièce depuis sa position de montage de telle sorte que le corps de distribution (11) peut être transféré par un déplacement en translation ou en rotation (35, 35') dans une position de nettoyage et maintenue de manière à pouvoir être retirée de celle-ci.

21. Unité de dosage selon l'une des revendications 1 à 20, **caractérisée en ce que** celle-ci forme une unité qui transporte les produits sensiblement sans vide supplémentaire jusque dans des récipients de dosage respectifs (DB) se raccordant aux conduits d'évacuation (6, 6').

22. Doseuse, **caractérisée par** une unité de dosage selon l'une des revendications 1 à 21, l'unité de dosage (D, D') étant prévue sous la forme d'un élément autonome de la doseuse (DM) à équipement variable.
